# NEUE EUROPÄISCHE PATENTSCHRIFT

(11) **EP 3 523 199 B2**
(45) Veröffentlichungstag und Bekanntmachung des Hinweises auf die Entscheidung über den Einspruch: **20.12.2023**
(45) Hinweis auf die Patenterteilung: 12.08.2020
(21) Anmeldenummer: 17777018.7
(22) Anmeldetag: 27.09.2017
(51) Int. Cl.: B64F 1/34, B64F 1/36

(54) **BODENSTARTGERÄT ZUM STARTEN UND WARTEN VON STRAHLTRIEBWERKEN VON FLUGZEUGEN**
AIR START UNIT FOR STARTING AND SERVICING JET ENGINES IN AIRCRAFT
GROUPE DE DÉMARRAGE PNEUMATIQUE SERVANT AU DÉMARRAGE ET À L'ENTRETIEN DE MOTEURS À RÉACTION D'AÉRONEFS

(30) Priorität: 04.10.2016 DE 102016118743
(43) Veröffentlichungstag der Anmeldung: 14.08.2019
(73) Patentinhaber: Rheinmetall Landsysteme GmbH, 29345 Unterlüß (DE)
(72) Erfinder: ECKHOFF, Detlef, 24238 Selent (DE); LIEBCHEN, Guido, 24848 Kropp (DE)
(74) Vertreter: Horn Kleimann Waitzhofer Schmid-Dreyer Patent- und Rechtsanwälte PartG mbB
(86) Internationale Anmeldenummer: PCT/EP2017/074501
(87) Internationale Veröffentlichungsnummer: WO 2018/065274

(56) Entgegenhaltungen:
- EP-A1- 1 655 222
- DE-U1-202008 015 623
- US-A1- 2009 112 368

## Beschreibung

Die vorliegende Erfindung betrifft ein Bodenstartgerät zum Starten und Warten von Strahltriebwerken von Flugzeugen und anderen Fluggeräten sowie zumindest zum zeitweisen Klimatisieren von Fluggeräten. Ein solches Bodenstartgerät wird benötigt, um Druckluft zum Starten der Turbinen bzw. Strahltriebwerken zu liefern.

Ein Strahltriebwerk muss zum Anlassen auf eine gewisse Drehzahl beschleunigt werden, bevor der Eigenantrieb des Strahltriebwerkes einsetzen kann. Im Normalfall muss dazu das Strahltriebwerk auf eine Drehzahl von etwa 15 bis 20% der maximalen Drehzahl beschleunigt werden. Eine solche Beschleunigung geschieht normalerweise mit Hilfe einer bordeigenen Anfahreinrichtung (Auxiliary Power Unit, APU). Falls diese jedoch ausfällt oder aus ökologischen und/oder ökonomischen Gründen nicht zu verwenden oder unrentabel ist, kann ein sogenanntes externes, mobiles Bodenstartgerät (Air Start Unit, ASU) verwendet werden, um das Strahltriebwerk starten zu können. Außerdem kommen Bodenstartgeräte zum Teil zum Einsatz, um Wartungskosten von bordeigenen Anfahreinrichtung einsparen bzw. reduzieren zu können.

Bisherige ASUs bestehen aus einer mit Kraftstoff betriebenen Gasturbine oder aus einem Dieselmotor getriebenen Verdichter, welcher durch die Abnahme eines Teiles des verdichteten Luftstromes Druckluft zur Verfügung stellen, damit das Strahltriebwerk gestartet werden kann. Ebenso wie zum Starten des Triebwerkes, kann ein solches Bodenstartgerät auch zum Warten eines Triebwerkes und/oder zum Klimatisieren eines Fluggerätes benötigt werden.

Aufgrund von Verschärfungen der Gesetzgebung im Bereich Emission, Wärme und Energieverbrauch ist es notwendig solche bestehenden Bodenstartgeräte entsprechend emissionsärmer, leiser und mit niedrigem Energieverbrauch zu entwickeln.

Hierzu ist bereits bekannt das Bodenstartgerät mit elektrischer Energie zu versorgen und mit der elektrischen Energie die Druckluft zu erzeugen. Ein solches Bodenstartgerät ist beispielsweise aus der DE 20 2008 015 623 U1 bekannt. Hierbei werden Verdichter mit einer Brennstoffzelle betrieben, welche elektrische Energie liefert, um die Verdichter anzutreiben.

Da die Technik der Batterien bzw. Akkumulatoren jedoch inzwischen so weit vorangeschritten ist, dass auch ohne Brennstoffe der Verdichter angetrieben werden kann, ist die Aufgabe der vorliegenden Erfindung ein direkt mit elektrischer Energie angetriebenes Bodenstartgerät zu ermöglichen, welches emissionsarm ist, lärmgeschützt und einen niedrigen Energieverbrauch aufweist.

Diese Aufgabe wird mit den Merkmalen des Hauptanspruches gelöst, nämlich, dass das Bodenstartgerät mit mindestens einem Verdichter zur Erzeugung von Druckluft ausgestattet ist und einer Spannungsversorgung zur Versorgung elektrischer Verbraucher, insbesondere der elektrischen Verbraucher des Bodenstartgeräts. Weiterhin ist der Verdichter von mindestens einem Elektromotor angetrieben, welcher die Energie zum Betrieb aus einer Hochspannungsbatterie geliefert bekommt.

Mittels mindestens einem Wechselrichter kann die von der Hochspannungsbatterie gelieferte Gleichspannung in ein- oder mehrphasiger Wechselspannung gerichtet und damit die Elektromotoren betrieben werden. Somit können Gleichstrommotoren oder Wechsel-/Drehstrommotoren als Elektromotoren verwendet werden. Der Wechselrichter kann dabei durch Einstellung der Frequenz der Spannung die Drehzahl des Elektromotors vorgeben.

Vorteilig bei dieser Art von Bodenstartgerät ist, dass die Elektromotoren zum Betrieb der Verdichter direkt mit elektrischer Energie angetrieben werden und somit keinerlei Kraftstoff zur Erzeugung der elektrischen Energie benötigt wird. Durch die elektrische Energie ist das vorliegende Bodenstartgerät emissionsarm und der Energieverbrauch ist gering, da direkt die elektrische Energie zum Betrieb der Verdichter verwendet wird.

Da die Technik zum Speichern elektrischer Energie hinsichtlich Batterien und Akkumulatoren als Energiespeicher mittlerweile so weit fortgeschritten ist, dass diese gut gespeichert werden kann und die Energiespeicher mit einem guten Wirkungsgrad versehen sind, kann die elektrische Energie in einer Hochspannungsbatterie gespeichert werden.

Die Hochspannungsbatterie ist vorzugsweise als Lithium-Ionen Batterie ausgeführt, um kurzzeitig eine hohe Leistung zum Betrieb des Verdichters entnehmen zu können. Das Starten und Warten der Strahltriebwerke dauert nur eine kurze Zeit, so dass nur kurzzeitig die hohe Leistung benötigt wird. Beispielsweise ist eine Energieentnahme von 320 kW für die Dauer von 2 min erforderlich. Diese Anforderung ist jedoch ja nach Strahltriebwerk unterschiedlich.

In einer besonderen Ausführungsform ist dem Bodenstartgerät weiterhin ein Laderegler beigeordnet, welcher den Ladevorgang der Hochspannungsbatterie regelt. An diesen Laderegler kann elektrische Energie eingespeist werden und die elektrische eingespeiste Energie wird dann der Hochspannungsbatterie zugeführt, damit diese die elektrische Energie speichert. Der Laderegler ist dazu so ausgeführt, dass er mit verschiedenen Spannungsarten die Batterie speisen kann, also Gleichspannung sowie auch Wechselspannung. Der Laderegler kann auch so gestaltet sein, dass er mit Drehstrom gespeist werden kann. Der Laderegler sorgt dann dafür, dass die eingespeiste elektrische Energie auf eine entsprechende Spannung für die Hochspannungsbatterie umtransferiert wird und die Hochspannungsbatterie dann mit der umtransferierten Spannung gespeist wird. Je nach Konfiguration der Motoren und der Wechselrichter, kann hierzu eine Spannung verwendet werden, welche deshalb oberhalb der Kleinspannungsgrenze angeordnet ist, also oberhalb von 120 V.

Der Laderegler sorgt ebenfalls für eine Begrenzung des Ladestroms und eine Überwachung der Ladekapazität der Hochspannungsbatterie. Hierdurch verhindert der Laderegler, dass der Hochspannungsbatterie zu viel Strom zugeführt wird und diese dadurch beschädigt wird. Ebenso sorgt der Laderegler dafür, dass eine vollgeladene Batterie nicht weitergeladen wird und der Ladestrom bei vollgeladener Hochspannungsbatterie abgeschaltet wird.

Die Hochspannungsbatterie liefert eine Hochspannung (HV), mittels welcher die Elektromotoren angetrieben werden. Erfindungsgemäß sind mindestens ein Elektromotor und ein Verdichter, der dem Elektromotor nachgeschaltet ist, vorgesehen. Es können aber auch mehr Elektromotoren bzw. Verdichter verwendet werden.

Die Verwendung eines Drehstrommotors wird als Elektromotor vorgeschlagen, da dieser recht günstig zu beschaffen ist und einen vernünftigen Wirkungsgrad aufweist. Ebenso kann als Elektromotor jedoch auch ein Gleichspannungsmotor verwendet werden, der seine elektrische Energie direkt aus der Batterie bezieht.

Falls Drehstrommotoren als Elektromotoren verwendet werden, ist in einem besonderen Ausführungsbeispiel die Verwendung von Wechselrichter vorgesehen. Die Wechselrichter werden zwischen der Hochspannungsbatterie und den Elektromotoren angeordnet, sodass sie die Gleichspannung aus den Hochspannungsbatterien entsprechend der benötigten Wechselspannung für die Elektromotoren richten. So kann beispielsweise ein Wechselrichter vorgesehen sein, der aus einer Hochspannung von 666 Volt Gleichspannung einen dreiphasigen Drehstrom richtet mit 400 Volt Wechselspannung.

Die Elektromotoren treiben wiederum mindestens einen Verdichter an, der die benötigte Druckluft erzeugt. Es ist mindestens ein Verdichter vorgesehen zur Erzeugung der Druckluft. Es können aber auch mehrere Verdichter verendet werden. Bei Verwendung von mehreren Verdichtern können diese parallel betrieben werden, um ein höheres Volumen der Druckluft zu erzeugen. Sie können aber auch nacheinander geschaltet sein, um ein höheren Druck der Druckluft zu gewährleisten. Als besonders vorteilhaft hat sich hierbei erwiesen, wenn die Verdichter als Radialverdichter ausgeführt sind.

Erfindungsgemäße Bodenstartgeräte können neben dem zur Verfügung stellen von Druckluft zum Starten und Warten von Turbinen und Strahltriebwerken auch für die elektrische Versorgung von Flugzeugen und anderen Fluggeräten genutzt werden Da jedoch die Hochspannung, welche aus der Hochspannungsbatterie geliefert wird, für das Bordnetz eines Flugzeuges oder einen anderen Fluggerätes zu hoch ist, muss zur Verwendung der Spannung / elektrischen Energie durch das Flugzeug oder anderen Fluggeräten diese zunächst auf eine nutzbare Niederspannung geregelt werden. Dazu ist erfindungsgemäß ein Spannungswandler vorgesehen, welcher die Hochspannung aus der Hochspannungsbatterie in Niederspannung wandelt. Diese Niederspannung kann als Gleich- oder Wechselspannung ausgeführt sein. Beispielsweise könnte die vorher genannte Hochspannung von 666 Volt Gleichspannung in 115 Volt Wechselspannung mit 400 Hz oder auch 28 V Gleichspannung gewandelt werden und somit zusätzlich/parallel die Funktion einer GPU (ground power unit), entsprechend emissionsärmer, leiser und mit niedrigerem Energieverbrauch darstellen.

Die so bereitgestellte Niederspannung (LV) wird kann in einer besonderen Ausführungsform in einer Niederspannungsbatterie gespeichert werden. Daran angeschlossen wird eine Spannungsversorgung vorgeschlagen, über welche die Versorgung der Flugzeuge und anderen Fluggeräten mit der Niederspannung gewährleistet ist. Ebenso werden die elektrischen Verbraucher des Bodengeräts durch diese Spannungsversorgung mit Niederspannung versorgt.

Durch diesen Aufbau kann die Niederspannungsbatterie entweder durch die Spannungsversorgung mit Niederspannung geladen werden oder aber über die Hochspannungsbatterie und den oben genannten Spannungswandler. Die Spannungsversorgung kann somit entweder als Eingang oder Ausgang der Niederspannungsversorgung dienen.

Erfindungsgemäß besitzt mindestens ein Verdichter einen Lufteinlass und mindestens ein Verdichter einen Luftauslass. Bei Verwendung nur eines Verdichters besitzt dieser Luftein- und Luftauslass. Der Lufteinlass sorgt dafür, dass Luft dem Verdichter zugefügt wird und der Verdichter erfindungsgemäß diese in Druckluft umwandelt. Diese so erzeugte Druckluft wird dann am Luftauslass abgegeben. Die am Luftauslass abgegebene Druckluft kann dann zum Starten und Warten von Strahltriebwerken von Flugzeugen und anderen Fluggeräten verwendet werden.

In einer besonderen Ausführungsform bei Verwendung von mehreren Verdichtern können diese mehrstufige Druckluft erzeugen, in dem der Lufteinlass nur einem Verdichter zugeführt wird und die Luft dann zunächst über den ersten Verdichter verdichtet wird, sodass dieser Druckluft mit einem bestimmten Druck erzeugt. Diese erzeugte Druckluft wird dann dem nachgeschalteten zweiten Verdichterzugeführt, welcher nochmal die bereits verdichtete Druckluft weiter verdichtet. Somit können höhere Drücke erzeugt werden. Es können auch mehr als zwei Verdichter nacheinander geschaltet werden. Der Luftauslass wird dann lediglich am letzten Verdichter der nacheinander geschalteten Verdichter angeordnet.

Erfindungsgemäß können die oben genannten Bauelemente auf einer Montageplatte angebracht werden und ein entsprechendes Gehäuse verwendet werden, welches die gesamte Vorrichtung umgibt. Bevorzugterweise ist das Gehäuse mit schallisolierenden Elementen versehen, sodass Geräusche aus dem Inneren des Gehäuses nur gedämpft an das Äußere des Gehäuses abgegeben werden. Somit ist ein Lärmschutz realisiert. Außerdem dient das Gehäuse auch zur thermischen Isolation gegenüber hohen Außentemperaturen, Strahlungswärme und weiteren Umwelteinflüssen wie Regen und Staub. Darüber hinaus hat das Gehäuse noch die Aufgabe den Bediener von hochspannungsführenden Komponenten abzuschirmen.

Die Hochspannungsbatterien können vorteilhafter Weise in klimatisierbaren Modulrahmen aufgenommen werden und vorzugweise über Schnellverschlüsse mit der Montageplatte modulweise verbunden werden.

Die Anforderungen an die Betriebsdauer des Systems kann somit kundenspezifisch durch die Anzahl der montierten Batteriemodule variiert werden.

Für den reibungslosen Betrieb des vorgeschlagenen Bodenstartgerätes wird weiterhin ein Klimasystem vorgeschlagen, welches dem Bodenstartgerät zugehörig ist. Da insbesondere die Wechselrichter und die Hochspannungsbatterie ihre volle Leistung bzw. Kapazität nur in einem gewissen Temperaturbereich liefern, sorgt das Klimasystem dafür, dass die Hochspannungsbatterie und die Wechselrichter in diesem Temperaturbereich arbeiten können. So kann das vorgeschlagene Klimasystem die Komponenten Hochspannungsbatterie und Wechselrichter kühlen aber auch wärmen. Das führt dazu, dass bei sehr niedrigen Außentemperaturen die Komponenten entsprechend gewärmt werden können, um eine optimale Funktion zu gewährleisten. Ebenso können bei sehr hohen Umgebungstemperaturen die Komponenten heruntergekühlt werden.

Weiterhin wird vorgeschlagen, dem Bodenstartgerät ein Ölmodul zuzuordnen, welches die beweglichen Teile der Verdichter schmiert. Hierzu wird durch das Ölmodul ein Ölfilm in den Verdichterngewährleistet, welcher dafür sorgt, dass die beweglichen Teile der Verdichter, beispielsweise die Radialwellen, möglichst reibungsarm laufen. Das Ölmodul besitzt dafür einen Ölvorrat sowie ein Drucksystem, um Öl aus dem Ölvorrat den Verdichtern zuliefern zu können. Konstruktiv muss dafür gesorgt werden, dass die erzeugte Druckluft ölfrei an den angeschlossenen Verbraucher geliefert wird. Dies kann beispielsweise durch eine Abdichtung der Druckluftführung geschehen.

Weitere Merkmale der vorliegenden Erfindung ergeben sich aus den Zeichnungen. Es zeigen:
- Figur 1:: eine perspektivische Darstellung eines erfindungsgemäßen Bodenstartgerätes,
- Figur 2:: Blockschaltbild eines erfindungsgemäßen Bodenstartgerätes.

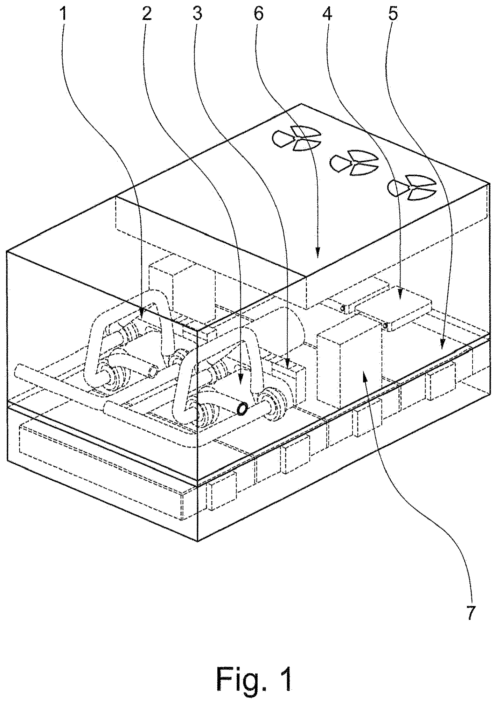

In Figur 1 sind alle Komponenten eines erfindungsgemäßen Bodenstartgerätes als perspektivische Darstellung gezeigt. Dazu sind die Komponenten auf eine Montageplatte angebracht.

Auf der Montageplatte montiert sind zwei Verdichter 1 zur Erzeugung von Druckluft. Ein Elektromotor 2 ist den Verdichtern 1 beigeordnet, um die Verdichter 1 anzutreiben.

Die gezeigten Elektromotoren 2 sind hierbei als Drehstrommotoren ausgeführt, weshalb sie über Wechselrichter 3 mit elektrischer Energie versorgt werden. Die Wechselrichter 3 wiederum beziehen ihre elektrische Energie aus einer Hochspannungsbatterie 5, welche in der Montageplatte eingelassen ist. Die Hochspannungsbatterie 5 versorgt nun die Wechselrichter 3 mit Hochspannung (HV), beispielsweise einer Gleichspannung von 600 Volt. Für die Beschreibung der vorliegenden Erfindung wird jede Spannung über Kleinspannungsniveau als Hochspannung bezeichnet.

Die dem Wechselrichter 3 zugeführte Hochspannung aus der Hochspannungsbatterie 5 wird nun über dem Wechselrichter 3 in Drehstrom gewandelt und den Elektromotoren 2 zugeführt. Die Elektromotoren 2 wiederum treiben die Verdichter 1 an. Als vorteilhaft hierbei hat sich ein Riemenantrieb erwiesen, sodass die Verdichter 1 über je einen Riemenantrieb durch die Motoren 2 angetrieben werden.

Um die Hochspannungsbatterie 5 laden zu können, ist ein Laderegler 4 gezeigt, welcher elektrische Anschlüsse aufweist, um von außerhalb des Bodenstartgerätes dieses zum Laden der Hochspannungsbatterie 5 mit elektrischer Energie zu versorgen.

Damit die Verdichter 1 reibungslos funktionieren, ist ein Ölmodul 7 vorgesehen, welches die beweglichen Teile der Verdichter1 mit Öl versorgt. Ebenfalls zu sehen, ist ein Klimasystem 6, welches das Bodenstartgerät innerhalb gewissen Temperaturgrenzen regelt. So sorgt das Klimasystem 6 dafür, dass die Luft innerhalb des Bodenstartgerätes sowie auch die Komponenten gewisse Temperaturbereiche nicht über- oder unterschreiten. Dazu ist das Klimasystem 6 so aufgebaut, dass es die Luft im Bodenstartgerät kühlen und /oder heizen kann.

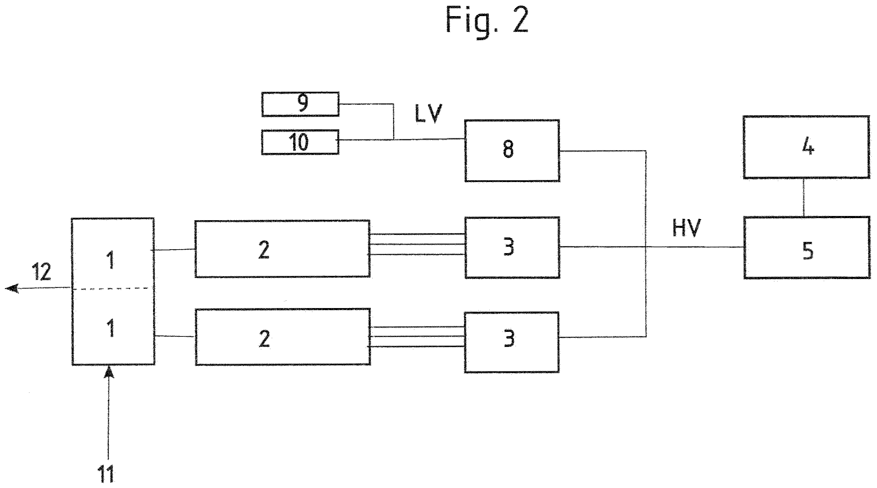

Figur 2 verdeutlicht noch einmal das Wirkungsprinzip des vorgeschlagenen Bodenstartgerätes als Blockschaltbild. Dem Bodenstartgerät zugehörig ist eine Hochspannungsbatterie 5, welche Hochspannung (HV) liefert. Geladen werden kann die Hochspannungsbatterie 5 durch ein Laderegler 4. Die abgegebene Hochspannung wird in diesem Ausführungsbeispiel zwei Wechselrichtern 3 zugeführt, welche aus der Hochspannungsbatterie 5 Drehspannungen für zwei Elektromotoren 2 wandeln können. Die Verwendung von Wechselrichtern 3 hat den weiteren Vorteil, dass der Start- und Stoppvorgang der Elektromotoren 2 durch entsprechende Anfahrund Abstopprampen optimal geregelt werden kann. Dazu regelt der Wechselrichter 3 beim Anfahren und Abstoppen der Elektromotoren 2 die Frequenzen nach einer mathematischen Funktion.

Über die so angetriebene Elektromotoren 2 werden zwei nacheinander geschaltete Verdichter 1 angetrieben, vorteilhafterweise mittels eines Riemenantriebes. Die Verdichter 1 sind in diesem Ausführungsbeispiel nacheinander geschaltet, um höhere Drücke der Druckluft ermöglichen zu können. So wird normale Luft über einen Lufteinlass 11 dem ersten Verdichter 1 zugeführt, welcher zweistufig aus der zugeführten Luft Druckluft erzeugt. Einen Luftauslass 12 ist der zweiten Verdichterstufe zugeordnet, damit die Druckluft dem Verdichter 1 entnommen werden kann. Mit dieser entnommenen Druckluft werden dann Strahltriebwerke bzw. Turbinen von Flugzeugen und andern Fluggeräten zum Starten und Warten angetrieben.

Bei universell einsetzbaren Bodenstartgeräte hat es sich als vorteilhaft erwiesen, zunächst zwei Verdichter parallel zu betreiben und einen weiteren, dritten Verdichter nachzuschalten (nicht gezeigt). Bei diesem Wirkprinz ist das System mit zwei Luftauslässen 12 ausgestattet, um den geforderten Luftstrom z. B. zum Starten der eines Triebwerks mit vertretbaren Strömungsverlusten übertragen zu können. Außerdem sind die meisten Fluggeräte aus diesem Grund mit mehreren Lufteinlassstutzen ausgestattet, damit die Luft über mehrere Schläuche zugeführt werden kann.

Ebenfalls in Figur 2 zu sehen ist ein Spannungswandler 8, welcher zwischen der Hochspannung HV und einer Niedrigspannung LV wandelt. In diesem Ausführungsbeispiel ist die Niederspannung als Gleichspannung ausgeführt. An der Niedrigspannung ist weiterhin eine Niedrigspannungsbatterie 9 vorgesehen, welche die Niedrigspannung speichern kann. Zur Zuführung und Entnahme der Niedrigspannung ist eine Spannungsversorgung 10 vorgesehen. Hierüber kann entweder die Niedrigspannungsbatterie 9 geladen werden oder aber Niedrigspannung aus dem Bodenstartgerät zum Betreiben von elektrischen Verbrauchern in Flugzeugen oder anderen Fluggeräten entnommen werden. Die so entnommene Spannung speist sich dann aus der Niedrigspannungsbatterie 9 und/oder der Hochspannungsbatterie 5 unter Zwischenschaltung des Spannungswandlers 8. Ebenso werden die elektrischen Verbraucher des Bodenstartgeräts mit der Niedrigspannung gespeist.

Die vorliegende Erfindung ist nicht auf die vorbenannten Merkmale beschränkt. Vielmehr sind weitere Ausführungsformen denkbar. So könnten statt Drehstrommotoren auch Gleichstrommotoren als Elektromotoren verwendet werden. In diesem Falle entfällt die Verwendung der Wechselrichter. Ebenso ist es möglich mehrere Hochspannungsbatterien zu verwenden, um entweder die Kapazität der Hochspannungsbatterie zu erhöhen oder die Spannung, welche der Hochspannungsbatterie entnommen wird, zu erhöhen. Weiterhin ist es möglich die Verdichter nicht über einen Riemenantrieb zwischen Elektromotor und Verdichter anzutreiben, sondern beispielsweise über einen Direktantrieb, bei dem der Verdichter an die Welle des Elektromotors angeschlossen wird. Hierbei ist es auch möglich, die Drehzahl über ein Getriebe zu regulieren. Die Hochspannungsbatterie sowie auch die Verdichter sind modular aufgebaut, so dass je nach Leistungsanforderung entsprechende Verdichter und Hochspannungsbatterien im Bodenstartgerät eingesetzt und ggf. ersetzt werden können.

### 1. Bezugszeichenliste

- 1: Verdichter
- 2: Elektromotor
- 3: Wechselrichter
- 4: Laderegler
- 5: Hochspannungsbatterie
- 6: Klimasystem
- 7: Ölmodul
- 8: Spannungswandler
- 9: Niederspannungsbatterie
- 10: Spannungsversorgung
- 11: Lufteinlass
- 12: Luftauslass

## Patentansprüche

1. Bodenstartgerät zum Starten und Warten von Strahltriebwerken von Flugzeugen und anderen Fluggeräten, mit mindestens einem Verdichter (1) zur Erzeugung von Druckluft und einer Spannungsversorgung (10) zur Versorgung elektrischer Verbraucher, wobei der Verdichter (1) von mindestens einem Elektromotor (2) angetrieben wird **dadurch gekennzeichnet, dass** das Bodenstartgerät mindestens eine Hochspannungsbatterie (5) beinhaltet und dass die elektrische Energie zum Betrieb des Elektromotors (2) aus der mindestens einen Hochspannungsbatterie (5) gespeist wird, wobei die Hochspannung der Hochspannungsbatterie (5) oberhalb von 120V angeordnet ist, dass ein Spannungswandler (8) im Bodenstartgerät vorgesehen ist, welcher Hochspannung in Niederspannung wandelt, wobei diese Niederspannung als Gleichspannung von z.B. 28V oder Wechselspannung von z.B. 115V mit 400Hz ausgeführt sein kann, und dass eine Niederspannungsbatterie (9) im Bodenstartgerät vorgesehen und dem Spannungswandler (8) nachgeschaltet ist.

2. Bodenstartgerät nach Anspruch 1, **dadurch gekennzeichnet, dass** für den Elektromotor (2) mittels mindestens einem Wechselrichter (3) die elektrische Energie in Drehstrom gewandelt wird.

3. Bodenstartgerät nach einem der Ansprüche 1 oder 2, **dadurch gekennzeichnet, dass** die Spannungsversorgung (10) elektrische Energie aus der Niederspannungsbatterie (9) und/oder dem Spannungswandler (8) bezieht.

4. Bodenstartgerät nach einem der Ansprüche 1 bis 3, **dadurch gekennzeichnet, dass** im Bodenstartgerät ein Laderegler (4) vorgesehen ist, welcher den Ladevorgang der Hochspannungsbatterie (5) regelt.

5. Bodenstartgerät nach einem der Ansprüche 1 bis 4, **dadurch gekennzeichnet, dass** der mindestens eine Verdichter (1) einen Lufteinlass (11) und mindestens einen Luftauslass (12) aufweist.

6. Bodenstartgerät nach einem der Ansprüche 2 bis 5, **dadurch gekennzeichnet, dass** ein Klimasystem (6) im Bodenstartgerät vorgesehen ist, welches den Wechselrichter und die Hochspannungsbatterie (5) sowie den Elektromotor (2) erwärmen und/oder kühlen kann.

7. Bodenstartgerät nach einem der Ansprüche 1 bis 6, **dadurch gekennzeichnet, dass** ein Ölmodul (7) im Bodenstartgerät vorgesehen ist, welches die Ölversorgung für die schmierbedürftigen Elemente, wie Verdichter (1) oder Elektromotor (2), gewährleistet.

8. Bodenstartgerät nach einem der Ansprüche 1 bis 7, **dadurch gekennzeichnet, dass** der mindestens eine Verdichter (1) über einen Riemenantrieb vom Elektromotor (2) angetrieben wird.

9. Bodenstartgerät nach einem der Ansprüche 1 bis 8, **dadurch gekennzeichnet, dass** der mindestens eine Verdichter (1) als Radialverdichter ausgeführt ist.

10. Bodenstartgerät nach einem der Ansprüche 1 bis 19, **dadurch gekennzeichnet, dass** mindestens zwei Verdichter (1) verwendet werden, welche mehrstufig die Druckluft erzeugen.

11. Bodenstartgerät nach einem der Ansprüche 1 bis 10, **dadurch gekennzeichnet, dass** ein Gehäuse um das Bodenstartgerät herum angeordnet ist, welches mit schall- und/oder thermisch isolierenden Mitteln ausgestattet ist.

12. Bodenstartgerät nach einem der Ansprüche 1 bis 11, **dadurch gekennzeichnet, dass** eine Montageplatte vorgesehen ist, auf welcher das Bodenstartgerät aufgebaut ist.

13. Bodenstartgerät nach einem der Ansprüche 1 bis 12, **dadurch gekennzeichnet, dass** Verdichter (1), Elektromotor (2), Wechselrichter (3), Laderegler (4), Hochspannungsbatterie (5), Klimasystem (6), Ölmodul (7), Spannungswandler (8), Niederspannungsbatterie (9) und Spannungsversorgung (10) modular aufgebaut sind und somit im Bodenstartgerat austauschbar sowie kundenspezifisch konfigurierbar sind.

## Claims

1. Air start unit for starting and servicing jet engines of aircraft and other flying machines, with at least one compressor (1) for producing compressed air and a voltage supply (10) for supplying electrical power consumers, wherein the compressor (1) is driven by at least one electric motor (2), **characterized in that** the air start unit contains at least one high voltage battery (5), and **in that** the electrical energy for operating the electric motor (2) is supplied from the at least one high voltage battery (5), wherein the high voltage of the high voltage battery (5) is above 120 V, wherein a voltage converter (8) is provided in the air start unit, the said voltage converter (8) converting a high voltage into a low voltage, wherein the said low voltage can be implemented as a direct voltage of, for example, 28 V or an alternating voltage of, for example, 115 V at 400 Hz, and **in that** a low voltage battery (9) is provided in the air start unit and is connected downstream of the voltage converter (8).

2. Air start unit according to Claim 1, **characterized in that** the electrical energy is converted into threephase electricity for the electric motor (2) by means of at least one inverter (3).

3. Air start unit according Claim 1 or 2, **characterized in that** the voltage supply (10) draws electrical energy from the low voltage battery (9) and/or the voltage converter (8).

4. Air start unit according to one of Claims 1 to 3, **characterized in that** a charging controller (4) is provided in the air start unit, the said charging controller controlling the charging process for the high voltage battery (5).

5. Air start unit according to one of Claims 1 to 4, **characterized in that** the at least one compressor (1) has an air inlet (11) and at least one air outlet (12).

6. Air start unit according to one of Claims 2 to 5, **characterized in that** an air conditioning system (6) is provided in the air start unit, which air conditioning system can heat and/or cool the inverter and the high voltage battery (5) and the electric motor (2).

7. Air start unit according to one of Claims 1 to 6, **characterized in that** an oil module (7) is provided in the air start unit, which oil module guarantees the oil supply for the elements that require lubrication, such as the compressor (1) or the electric motor (2).

8. Air start unit according to one of Claims 1 to 7, **characterized in that** the at least one compressor (1) is driven by the electric motor (2) by means of a belt drive.

9. Air start unit according to one of Claims 1 to 8, **characterized in that** the at least one compressor (1) is implemented as a radial compressor.

10. Air start unit according to one of Claims 1 to 9, **characterized in that** at least two compressors (1) are used, which compressors produce the compressed air in multiple stages.

11. Air start unit according to one of Claims 1 to 10, **characterized in that** a housing is disposed around the air start unit, which housing is equipped with sound insulation means and/or thermal insulation means.

12. Air start unit according to one of Claims 1 to 11, **characterized in that** a mounting panel is provided, on which mounting panel the air start unit is constructed.

13. Air start unit according to one of Claims 1 to 12, **characterized in that** the compressor (1), electric motor (2), inverter (3), charging controller (4), high voltage battery (5), air conditioning system (6), oil module (7), voltage converter (8), low voltage battery (9) and voltage supply (10) are constructed in modular form and thereby replaceably in the air start unit and can be configured customerspecifically.

## Revendications

1. Groupe de démarrage pneumatique pour le démarrage et la maintenance de moteurs à réaction d'aéronefs et d'autres engins volants, comprenant au moins un compresseur (1) destiné à produire de l'air comprimé, et une alimentation électrique (10) destinée à alimenter des récepteurs électriques, le compresseur (1) étant entraîné par au moins un moteur électrique (2), **caractérisé en ce que** le groupe de démarrage pneumatique contient au moins une batterie à haute tension (5), **en ce que** l'énergie électrique destinée à faire fonctionner le moteur électrique (2) est alimentée par l'au moins une batterie à haute tension (5), la haute tension de la batterie à haute tension (5) étant supérieure à 120 V, **en ce qu'**un convertisseur de tension (8) se trouve dans le groupe de démarrage pneumatique, lequel convertit la haute tension en basse tension, cette basse tension pouvant être conçue comme une tension continue de 28 V, par exemple, ou une tension alternative, par exemple de 115 V à 400 Hz et **en ce qu'**une batterie à basse tension (9) se trouve dans le groupe de démarrage pneumatique et est branchée en aval du convertisseur de tension (8).

2. Groupe de démarrage pneumatique selon la revendication 1, **caractérisé en ce que** l'énergie électrique pour le moteur électrique (2) est convertie en courant triphasé au moyen d'au moins un onduleur (3).

3. Groupe de démarrage pneumatique selon la revendication 1 ou 2, **caractérisé en ce que** l'alimentation électrique (10) se procure l'énergie électrique à partir de la batterie à basse tension (9) et/ou du convertisseur de tension (8).

4. Groupe de démarrage pneumatique selon l'une des revendications 1 à 3, **caractérisé en ce qu'**un régulateur de charge (4) se trouve dans le groupe de démarrage pneumatique, lequel régule l'opération de charge de la batterie à haute tension (5).

5. Groupe de démarrage pneumatique selon l'une des revendications 1 à 4, **caractérisé en ce que** l'au moins un compresseur (1) possède une admission d'air (11) et au moins une sortie d'air (12).

6. Groupe de démarrage pneumatique selon l'une des revendications 2 à 5, **caractérisé en ce qu'**un système de climatisation (6) se trouve dans le groupe de démarrage pneumatique, lequel peut réchauffer et/ou refroidir l'onduleur et la batterie à haute tension (5) ainsi que le moteur électrique (2).

7. Groupe de démarrage pneumatique selon l'une des revendications 1 à 6, **caractérisé en ce qu'**un module à huile (7) se trouve dans le groupe de démarrage pneumatique, lequel assure l'alimentation en huile des éléments nécessitant une lubrification, comme le compresseur (1) ou le moteur électrique (2).

8. Groupe de démarrage pneumatique selon l'une des revendications 1 à 7, **caractérisé en ce que** l'au moins un compresseur (1) est entraîné par le moteur électrique (2) par le biais d'un entraînement par courroie.

9. Groupe de démarrage pneumatique selon l'une des revendications 1 à 8, **caractérisé en ce que** l'au moins un compresseur (1) est réalisé sous la forme d'un compresseur radial.

10. Groupe de démarrage pneumatique selon l'une des revendications 1 à 9, **caractérisé en ce qu'**au moins deux compresseurs (1) sont utilisés, lesquels produisent l'air comprimé sur plusieurs étages.

11. Groupe de démarrage pneumatique selon l'une des revendications 1 à 10, **caractérisé en ce qu'**un boîtier est dispose autour du groupe de démarrage pneumatique, lequel est équipé de moyens d'isolation acoustique et/ou thermique.

12. Groupe de démarrage pneumatique selon l'une des revendications 1 à 11, **caractérisé en ce qu'**une plaque de montage est présente, sur laquelle est érigé le groupe de démarrage pneumatique.

13. Groupe de démarrage pneumatique selon l'une des revendications 1 à 12, **caractérisé en ce que** le compresseur (1), le moteur électrique (2), l'onduleur (3), le régulateur de charge (4), la batterie à haute tension (5), le système de climatisation (6), le module à huile (7), le convertisseur de tension (8), la batterie à basse tension (9) et l'alimentation électrique (10) sont de construction modulaire et peuvent ainsi être remplacés et aussi configurés spécifiquement pour le client dans le groupe de démarrage pneumatique.
